# EUROPEAN PATENT SPECIFICATION

(11) **EP 1 690 243 B1**
(45) Date of publication and mention of the grant of the patent: **23.01.2008**
(21) Application number: 03768120.2
(22) Date of filing: 25.11.2003
(51) Int. Cl.: G08G 5/06, H04B 7/185, G01S 5/04

(54) **ONBOARD DEVICE ON A VEHICLE FOR TRAFFIC SURVEILLANCE SYSTEMS IN AN AIRPORT AREA**
VORRICHTUNG AN BORD EINES FAHRZEUGES ZUR VERKEHRSÜBERWACHUNG IN EINEM FLUGHAFENBEREICH
DISPOSITIF EMBARQUE DE VEHICULE POUR SYSTEMES DE SURVEILLANCE DE TRAFIC DANS UNE ZONE D'AEROPORT

(43) Date of publication of application: 16.08.2006
(73) Proprietor: Thales Italia S.p.A., 20123 Milano (IT)
(72) Inventor: SAINI, Luca, Francesco, I-20050 Triuggio (IT)
(74) Representative: Carangelo, Pierluigi
(86) International application number: PCT/IT2003/000776
(87) International publication number: WO 2005/052887

(56) References cited:
- WO-A-95/03598
- US-A- 5 574 648
- US-A- 6 167 238
- US-A1- 2003 122 666

## Description

The present invention relates in general to traffic surveillance systems at an airport and, more particularly, to a device to be installed aboard a vehicle for identifying and controlling the vehicle itself in a traffic surveillance system at an airport.

Various types of moving objects are present at an airport: aircraft in the take-off or landing phase', parked aircraft, vehicles for the transport of passengers and baggage, tankers for refuelling the aircraft, vehicles for maintenance technicians and security personnel. At a large airport the number of such moving objects, hereinafter to be collectively indicated as vehicles, may arrive at several thousands. For the safety and efficiency of all the airport services it is desirable that the position and identity of all the vehicles present in the airport area should be accurately known at all times.

At present the most widely used surveillance systems are based on the combined and complementary use, of so-called "non-cooperative" sensors, i.e. sensors capable of detecting the position of a vehicle without requiring the presence in the vehicle of any particular active electronic devices, and so-called "cooperative" sensors, i.e. capable of detecting and identifying a vehicle provided with an electronic device that can interact with the central control unit of the system. Typical non-cooperative sensors are referred to by the acronym SMR (Surface Movement Radar) and are active radars capable of detecting metallic vehicles moving on a surface.

Typical cooperative sensors are the receivers for systems that are based on "multilateration" techniques, i.e. techniques that make it possible to locate a source of radio signals by measuring the time needed by the signal emitted by the source to reach three or more receivers situated in different predetermined positions. Other cooperative sensors are the receivers for systems that make it possible to locate a radio signal source by means of the reception and decoding of the signals themselves.

In the latter case the position of the source is already inserted in the signal that it emits. The signal sources carried aboard the aircraft are called "transponders", i.e. they generally are receiver-transmitter devices capable of transmitting signals both spontaneously and/or in response to the reception of interrogation signals.

The most widely used transponders in air traffic surveillance at present are the ones that respond to interrogation signals emitted by radars of the SSR (Secondary Surveillance Radar) type in A/C-Mode or in S Mode. The surveillance technique known as A/C-Mode requires all transponders installed aboard aircraft within the action radius of the radar to respond to an interrogation, while the technique known as S-Mode has a selective interrogation capacity, i.e. interrogations are always intended for a particular aircraft.

Other types of transponders that have recently been employed in air traffic surveillance systems in civil aviation are known as ADS-B S-Mode transponders. The acronym ADS-B (Automatic Dependent Surveillance-Broadcast) refers to techniques for the periodic and automatic transmission of information relating to the state of an aircraft, such as position, altitude, speed, etc. The frequency band used for ADS-B is 1090 MHz±1MHz. The ADS-B S-Mode techniques are considered to be particularly advantageous and safe, and their use has therefore been proposed not only for the surveillance of aircraft in flight and on the ground but also for the surveillance of vehicles and mobile objects of any kind in an airport area. In particular, it has been proposed to equip terrestrial vehicles and mobile objects with so-called non-transponder devices, which differ from the transponder devices by virtue of the fact that they are not provided with reception circuits: indeed, the vehicles have to be located (by means of the signal emissions), but do not have to respond to interrogations.

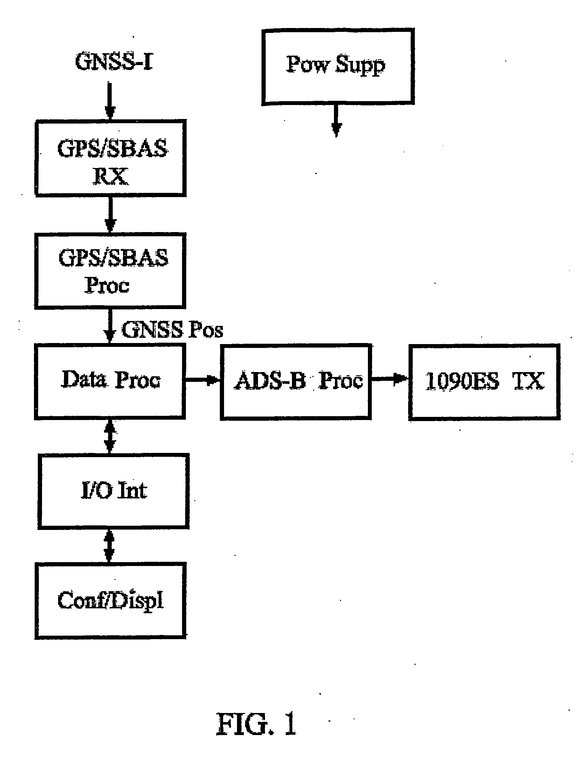

A known non-transponder device for installation in a vehicle or other mobile object is shown in the form of a functional block diagram in Figure 1 of the drawings attached hereto. In this figure a functional unit, indicated by GPS/SBAS RX, receives GNSS-I signals (Global Navigation Satellite System Interface) arriving from a satellite system, decodes them and then sends them to a functional unit, indicated by GPS/SBAS Proc. There the decoded signals are processed to obtain data (GNSS-Pos) that define the position of the vehicle on which the device is installed. These data are applied to a central processing unit, indicated by Data Proc, which is connected by means of an input/output interface, indicated by I/O Int, to a configuration and display unit, indicated by Conf/Displ. The central unit Data Proc generates data regarding the position of the vehicle and emission criteria determined in the unit Conf/Displ and feeds them to an ADS-B processor (ADS-B Proc). There the data are encoded according to ADS-B specifications and then sent to a transmission unit 1090ES TX that emits corresponding signals in S-Mode in the 1090 MHz ± 1 MHz band. The transmitted signals are constituted by unitary data sequences, modulated in pulse position on the carrier frequency of 1090 MHz; the unitary sequences constitute an "ADS-B message" and follow each other at a predetermined repetition frequency (emission rate). A power pack Pow Supp supplies all the circuits represented by the various functional blocks with the electric energy they need for functioning. The signals radiated by the device are received and decoded by the airport's control station and any aircraft present in the airport area or in its immediate neighbourhood, which can therefore accurately locate the ground vehicle on which the device is installed.

The principal drawback associated with the adoption of an S-Mode channel for ground vehicle surveillance consists on the fact that the radio emission load in the narrow band assigned to the channel is very great on account of the large number of vehicles that have to be checked in the airport area, so that interference effects between the signals can be intense and numerous and therefore compromise the safety of the aeronautical applications that are based on the S-Mode channel. The international body that concerns itself with standards in the civil aviation sector, known as ICAO (International Civil Aviation organization) has specified the emission criteria of S-Mode transponder devices for aircraft: the position messages have to be emitted twice a second when the aircraft is in motion and at a much lower rate, for example at the rate of once every five seconds when it is standing still. These criteria have been adopted with the intention of reducing interference between the signals emitted by the aircraft to the greatest possible extent. Nevertheless, the fact that, notwithstanding the adoption of these criteria, the same channel is also used for terrestrial vehicles would imply a radio signal load unacceptable at a large airport.

An on-board device capable of reducing the overload problems described hereinabove is already known from US 5,574,648.

The principal object of the present invention is to propose an onboard device for terrestrial vehicles of the type described above that can be used in an airport traffic surveillance system without causing the overload problems described hereinabove.

This object is attained by realizing the onboard device described and characterized in general terms in the first claim attached hereto, while particular embodiments are described by the dependent claims.

The invention will be understood more clearly from the following detailed description, which is given by way of example and is not to be considered limitative in any way, with reference to the attached figures, of which:
- Figure 1 shows a block diagram of a known non-transponder device,
- Figure 2 shows a block diagram of a non-transponder device in accordance with the invention and
- Figure 3 shows a detailed block diagram of a functional block of Figure 2.

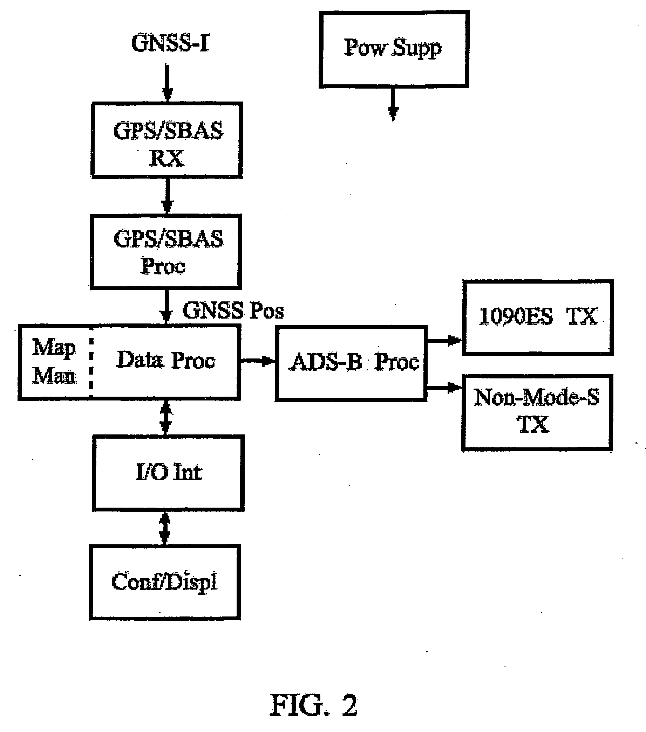

Referring to the block diagram of Figure 2, the device in accordance with the invention differs from its conventional counterpart shown' in Figure 1 principally by virtue of the fact that the central processing unit, again indicated by Data Proc, contains a module, indicated by Map Man, in which there are memorized topographical data, i.e. data that represent a map of the airport area in which the vehicle on which the device is to be installed is intended to operate, and data that define various emission profiles of the vehicle position signals. The module Map Man also contains processing means for managing the aforesaid data.

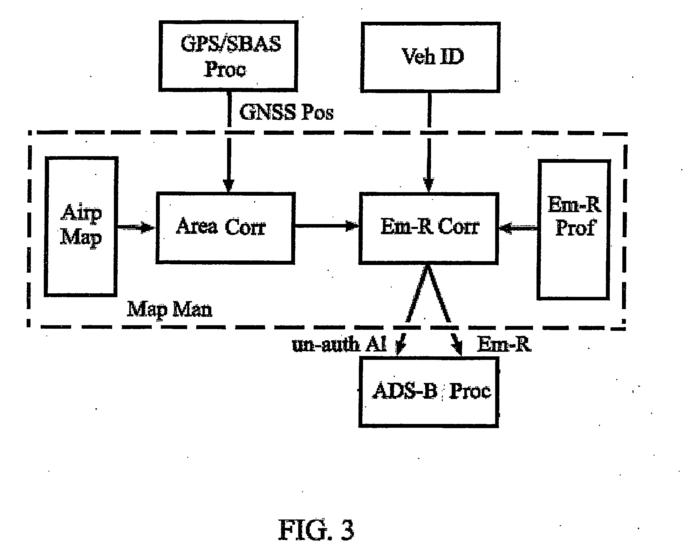

Moreover, according to the embodiment of the invention shown in the diagramme of Figure 2, the data encoded by processor ADS-B Proc are sent both to a band 1090MHz±1MHz Mode-S transmitter and to a transmitter, indicated by Non-Mode-S, that emits signals in a different band from the band used by the aircraft transponders, for example a VHF band. More particulary, as shown in the diagram of Figure 3, the module Map Man contains a data base (Airp Map) that defines a schematic map of the airport area in digital terms. The area i's subdivided into zones that can be assigned different safety levels on the basis of the specific characteristics of each one of them. A landing runway, for example, will be assigned the topmost safety level, whole a parking area for terrestrial vehicles will be associated with the minimum safety level. Furthermore, with each zone there may also be associated a list of vehicles that are permitted to enter the zone in question.

The management module Map Man contains also an area correlator (Area Corr) that contains an algorithm capable of relating the vehicle's position data GNSS-Pos arriving from the block GPS/SBAS Proc and the data that define the zone of the airport area that contains the position in question.

A second database, indicated by Em-R Prof, contains data that define various criteria, or profiles, for signal emission and, in particular, different repetition frequencies of the ADS-B messages.

An emission correlator, indicated by Em-R Corr, relates the zones defined in the zone correlator Ar Corr with respective emission profiles to provide the ADS-B processor with the data needed to set the emission parameters, particularly the repetition frequency (Em-R) of the ADS-B messages' to be transmitted and possibly also of data (un-auth Al) for getting under way a procedure for signaling presences in a zone where access is not permitted. Different profiles may be configured according to zones and according to vehicles.

In the shown example the emission correlator Em-R Corr receives also data from another onboard device (Veh ID) of the vehicle. These data characterize the vehicle, for example an identification code relating to the vehicle in question and its functional characteristics and possibly also a code identifying the vehicle driver. In this case the emission correlator Em-R Corr can also provide the ADS-B processor with data for possible warning notices regarding unauthorized access.

Use of the device in accordance with the invention makes it possible to implement a traffic surveillance service in an airport area with considerable safety guarantees and a minimum load of radio-frequency emissions. In particular, the possibility of associating at all times an exact location within the airport area with each vehicle makes it possible for the position signal emission profile most appropriate for the desired safety levels to be determined in each case and in an automatic manner. Since the emissions at maximum frequency are due only to the vehicles in movement in the most critical zones, for example the take-off and landing runways, i.e. a small percentage of the vehicles present in the airport area, the emission load in the frequency band (S-Mode at 1090 MHz) dedicated to data transmissions between aircraft is always limited. It should also be noted that the device=in accordance with the invention can readily be adapted for use in different airports: indeed, one has to do no more than to create the airport map and the emission profiles in each case, i.e. load the appropriate data in the data bases Airp Map and Em-R Prof.

Although only a single embodiment has here been illustrated and described, it is clear that numerous variants and modifications are possible without overstepping the underlying inventive concept. As far as generation of the position data of the vehicle is concerned, for example, in place of a location system of the GPS type, or also in combination therewith, it is possible to use a system based on a gyroscope and an odometer.

## Claims

1. An onboard device for a terrestrial vehicle for use in a traffic surveillance system in an airport area, comprising:
- means (GPS/SBAS-RX, -Proc) for generating vehicle position data (GNSS Pos),
- means (ADS-B Proc) for encoding the generated position data and
- means (1090ES TX) for transmitting, at a predetermined repetition frequency, radio-frequency signals containing the encoded data,
- means for memorizing topographical data (Airp Map), which define different zones of the airport area, and emission data (Em-R), which define different repetition frequencies of the signals to be transmitted (Em-R Prof),
- means (Em-R Corr) for associating emission data (Em-R) with topographical data (Airp Map) and
- means (Area Corr) for correlating the position data (GNSS Pos) of the vehicle with the topographical data (Airp Map) in order to identify the airport zone in which the vehicle happens to be and to assign the repetition frequency associated with the zone in which the vehicle happens to be as the repetition frequency of the signals to be transmitted,
**characterized in that** the means for transmitting radio-frequency signals comprise:
- a transmission unit (1090ES TX) functioning in accordance with the criteria of S-Mode surveillance technique, and
- a further transmission unit (Non-Mode-S TX) functioning in accordance with criteria different from those of S-Mode surveillance technique.

2. A device in accordance with Claim 1, comprising also means (Veh ID) for generating data that characterize the vehicle and means (ADS-B Proc) for encoding the characterization data, so that they may be transmitted together with the encoded position data.

3. A device in accordance with Claim 2, wherein the characterization data comprise identification data of the vehicle.

4. A device in accordance with Claim 2 or Claim 3, wherein the characterization data comprise identification data of the vehicle driver.

5. A device in accordance with any one of the preceding claims, wherein the means for generating position data comprise a satellite location system.

6. A device in accordance with any one of the preceding claims, wherein the means for generating position data comprise a gyroscope and an odometer.

7. A device in accordance with any one of the preceding claims, wherein the means for encoding the position data comprise a processor (ADS-B Proc) capable of encoding data in accordance with ADS-B specifications.

## Patentansprüche

1. Bordvorrichtung für ein terrestrisches Fahrzeug zur Verwendung in einem Verkehrsüberwachungssystem in einem Flughafenbereich mit:
- einer Einrichtung (GPS/SBAS-RX, -Proc) zum Erzeugen von Fahrzeugpositionsdaten (GNSS Pos),
- einer Einrichtung (ADS-B Proc) zum Codieren der erzeugten Positionsdaten und
- einer Einrichtung (1090ES TX) zum mit einer vorbestimmten Folgefrequenz erfolgenden Senden von Hochfrequenzsignalen, die die codierten Daten enthalten,
- einer Einrichtung zum Speichern von topographischen Daten (Airp Map), die unterschiedliche Zonen des Flughafenbereichs festlegen, und Emissionsdaten (Em-R), die unterschiedliche Folgefrequenzen der zu sendenden Signale (Em-R Prof) festlegen,
- einer Einrichtung (Em-R Corr) zum Zuordnen von Emissionsdaten (Em-R) zu topographischen Daten (Air Map) und
- einer Einrichtung (Area Corr) zum Korrelieren der Positionsdaten (GNSS Pos) des Fahrzeugs mit den topographischen Daten (Air Map), um die Flughafenzone zu identifizieren, in der sich das Fahrzeug gerade befindet, und um die Folgefrequenz, die der Zone zugeordnet ist, in der sich das Fahrzeug gerade befindet, als die Folgefrequenz der zu sendenden Signale zuzuweisen,
**dadurch gekennzeichnet, daß** die Einrichtung zum Senden von Hochfrequenzsignalen aufweist:
- eine Sendeeinheit (1090ES TX), die in Übereinstimmung mit den Kriterien der Mode-S-Überwachungstechnik funktioniert, und
- eine weitere Sendeeinheit (Non-Mode-S TX), die in Übereinstimmung mit Kriterien funktioniert, die sich von denen der Mode-S-Überwachungstechnik unterscheiden.

2. Vorrichtung nach Anspruch 1, ferner mit einer Einrichtung (Veh ID) zum Erzeugen von Daten, die das Fahrzeug kennzeichnen, und einer Einrichtung (ADS-B Proc) zum Codieren der Kennzeichnungsdaten, so daß sie zusammen mit den codierten Positionsdaten gesendet werden können.

3. Vorrichtung nach Anspruch 2, wobei die Kennzeichnungsdaten Identifizierungsdaten des Fahrzeugs aufweisen.

4. Vorrichtung nach Anspruch 2 oder Anspruch 3, wobei' die Kennzeichnungsdaten Identifizierungsdaten des Fahrzeugführers aufweisen.

5. Vorrichtung nach einem der vorstehenden Ansprüche, wobei die Einrichtung zum Erzeugen von Positionsdaten ein Satellitenortungssystem aufweist.

6. Vorrichtung nach einem der vorstehenden Ansprüche, wobei die Einrichtung zum Erzeugen von Positionsdaten ein Gyroskop und einen Wegstreckenmesser aufweist.

7. Vorrichtung nach einem der vorstehenden Ansprüche, wobei die Einrichtung zum Codieren der Positionsdaten einen Prozessor (ADS-B Proc) aufweist, der Daten in Übereinstimmung mit ADS-B-Spezifikationen codieren kann.

## Revendications

1. Dispositif embarqué pour un véhicule terrestre à utiliser dans un système de surveillance de trafic dans une zone d'aéroport, comprenant :
- des moyens (GPS/SABS-RX, -Proc) destinés à générer des données de position de véhicule (GNSS-Pos),
- des moyens (ADS-B Proc) destinés à coder des données de position générées et
- des moyens (1090ES TX) destinés à émettre, à une fréquence de répétition prédéterminée, des signaux de radiofréquence contenant les données codées,
- des moyens destinés à mémoriser des données topographiques (Airp Map), qui définissent différentes régions de la zone d'aéroport, et des données d'émission (Em-R), qui définissent différentes fréquences de répétition des signaux à émettre (Em-R Prof),
- des moyens (Em-R Corr) destinés à associer des données d'émission (Em-R) avec des données topographiques (Airp Map) et
- des moyens (Area Corr) destinés à corréler les données de position (GNSS Pos) du véhicule avec les données topographiques (Airp Map) afin d'identifier la région d'aéroport dans laquelle le véhicule apparaît et à attribuer la fréquence de répétition associée à la région dans laquelle le véhicule apparaît comme la fréquence de répétition des signaux à émettre,
**caractérisé en ce que** les moyens destinés à émettre des signaux radiofréquence comprennent :
- une unité d'émission (1090ES TX) fonctionnant selon les critères de la technique de surveillance en mode S, et
- une unité d'émission supplémentaire (Non-Mode-S TX) fonctionnant selon des critères différents de ceux de la technique de surveillance en mode S.

2. Dispositif selon la revendication 1, comprenant également des moyens (Veh ID) destinés à générer des données qui caractérisent le véhicule et des moyens (ADS-B Proc) destinés à coder les données de caractérisation, de sorte qu'ils puissent être émis conjointement avec les données de position codées.

3. Dispositif selon la revendication 2, dans lequel les données de caractérisation comprennent des données d'identification du véhicule.

4. Dispositif selon la revendication 2 ou la revendication 3, dans lequel les données de caractérisation comprennent des données d'identification du conducteur du véhicule.

5. Dispositif selon l'une quelconque des revendications précédentes, dans lequel les moyens destinés à générer des données de position comprennent un système de localisation par satellite.

6. Dispositif selon l'une quelconque des revendications précédentes, dans lequel les moyens destinés à générer des données de position comprennent un gyroscope et un odomètre.

7. Dispositif selon l'une quelconque des revendications précédentes, dans lequel les moyens destinés à coder les données de position comprennent un processeur (ADS-B Proc) capable de coder des données selon des spécifications ADS-B.
